# EUROPÄISCHE PATENTSCHRIFT

(11) **EP 0 531 780 B1**
(45) Veröffentlichungstag und Bekanntmachung des Hinweises auf die Patenterteilung: **15.11.1995**
(21) Anmeldenummer: 92114333.5
(22) Anmeldetag: 21.08.1992
(51) Int. Cl.: H02M 3/335

(54) **Schaltungsanordnung für ein freischwingendes Sperrwandler-Schaltnetzteil**
Circuit arrangement for a freely oscillating flyback converter
Disposition de circuit pour un convertisseur à découpage du type à récupération oscillant librement

(30) Priorität: 13.09.1991 DE 4130576
(43) Veröffentlichungstag der Anmeldung: 17.03.1993
(73) Patentinhaber: SIEMENS AKTIENGESELLSCHAFT, 80333 München (DE)
(72) Erfinder: Dangschat, Rainer, Dipl.-Ing. (FH), W-8011 Landsham (DE); Paulik, Ernst, W-8893 Hilgertshausen (DE)

(56) Entgegenhaltungen:
- EP-A- 0 219 736
- EP-A- 0 380 033

## Beschreibung

Die Erfindung betrifft eine Schaltungsanordnung für ein freischwingendes Sperrwandler-Schaltnetzteil nach dem Oberbegriff des Anspruchs 1.

Eine solche Schaltungsanordnung ist aus der Siemens Produktinformation "Funktion und Anwendung des Sperrwandler-IC TDA 4605", Bestell-Nr. B111-B6090, die 1989 erschienen ist, sowie der EP 0 380 033 A2 bekannt. Als Steuereinrichtung findet in diesen Veröffentlichungen der integrierte Schaltkreis TDA 4605 bzw. TDA 4605-2 von Siemens Verwendung. In der EP 0 380 033 A2 wurde ein Konzept vorgeschlagen, wie bei zunehmender Entlastung der Sekundärseite des Schaltnetzteiles, insbesondere im Standby-Betrieb, die Betriebsfrequenz des Schaltnetzteiles gezielt reduziert werden kann, ohne daß ein ungewolltes Ansteigen der Ausgangsspannung des Schaltnetzteiles erfolgt. Dazu war u.a. eine Erweiterung des integrierten Schaltkreises um eine Detektoreinrichtung notwendig.

Es hat sich herausgestellt, daß bei Sperrwandler-Schaltnetzteilen mit derartigen Steuereinrichtungen, die insbesondere für hohe Leistung und für eine hohe Frequenz optimiert sind, die Betriebsfrequenz bis auf 3 bis 10 kHz, also in den Hörbereich, absinken kann. Ein derartiges Sperrwandler-Schaltnetzteil gibt dann im Standby-Betrieb einen deutlich hörbaren Pfeifton von sich, das den Einsatz der Schaltung verbietet.

Der vorliegenden Erfindung liegt die Aufgabe zugrunde, Schaltnetzteile der eingangs genannten Art so weiterzubilden, daß diese auch für hohe Leistungen im Standby-Betrieb einsetzbar sind.

Diese Aufgabe wird durch das kennzeichnende Merkmal des Anspruchs 1 gelöst.

Weiterbildungen der Erfindung sind Gegenstand der Unteransprüche.

Die Erfindung wird im folgenden anhand eines Ausführungsbeispieles in Zusammenhang mit einer Figur näher erläutert.

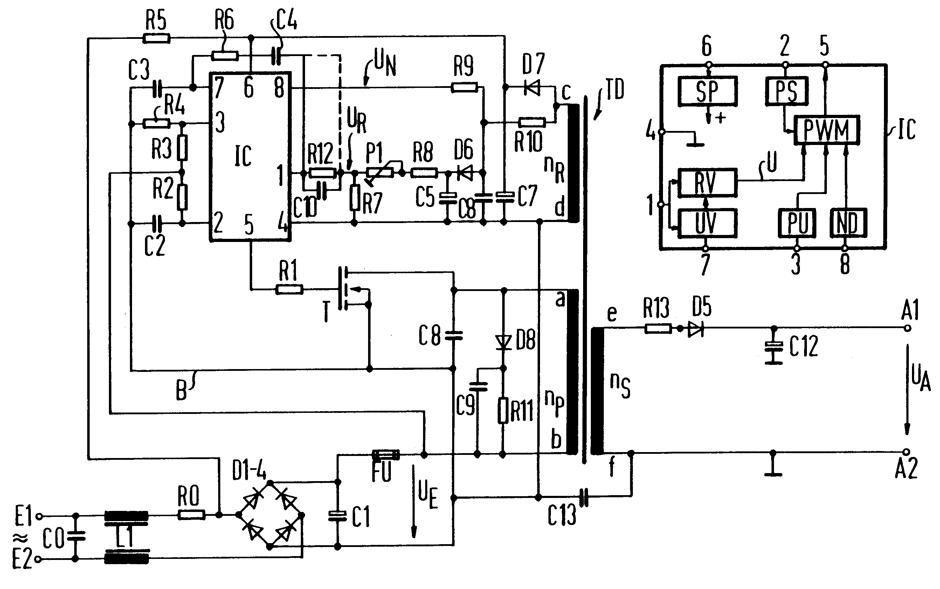

In der Figur ist eine Schaltungsanordnung für ein freischwingendes Sperrwandler-Schaltnetzteil dargestellt, wie es im wesentlichen aus den eingangs genannten beiden Veröffentlichungen bekannt ist. Die Schaltungsanordnung weist einen Transformator TD auf, der mindestens eine Primärwicklung n_{P} mit den Anschlüssen a, b, eine Regelwicklung n_{R} mit den Anschlüssen c, d und eine Sekundärwicklung n_{S} mit den Anschlüssen e, f auf. An die Anschlüsse e, f ist eine Gleichrichterstufe, bestehend aus dem Widerstand R13, der Diode D5 und dem Kondensator C12 angeschlossen. Der Anschluß f der Sekundärwicklung n_{S} liegt auf Bezugspotential. An sekundärseitigen Ausgangsklemmen A1, A2 des Schaltnetzteiles ist eine gleichgerichtete Ausgangsspannung U_{A} zum Versorgen einer nicht dargestellten Last abgreifbar, wobei die Ausgangsklemme A1 mit der Katode der Diode D5 und die Ausgangsklemme A2 mit Bezugspotential verbunden ist.

Um diese Ausgangsspannung U_{A} auf der Sekundärseite des Schaltnetzteiles zu erzeugen, ist primärseitig ein steuerbares elektrisches Schaltelement T, z.B. ein MOS-Leistungstransistor, vorgesehen, durch das an die Primärwicklung n_{P} des Transformators TD eine Gleichspannung U_{E} pulsweitenmoduliert anlegbar ist. Die Gleichspannung wird aus einer Wechselspannung von z.B. 90 bis 270 V an Eingangsklemmen E1, E2 des Schaltnetzteiles mit anschließendem Entstörglied C0, L1, R0 und nachfolgendem Brückengleichrichter D1-4 und Glättunskondensator C1 gewonnen und liegt zwischen der Serienschaltung der Laststrecke des Schaltelementes T und der Primärwicklung n_{P} des Transformators TD. Zwischen dem Anschluß b der Primärwicklung n_{P} des Transformators TD und dem Plusausgang des Brückengleichrichters D1-4 wird zweckmäßigerweise eine Sicherung FU vorgesehen.

Zum Ansteuern des Schaltelements T weist die Schaltungsanordnung im vorliegenden Ausführungsbeispiel eine integrierte Steuereinrichtung IC, z.B. den in der eingangs genannten Produktinformation ausführlich beschriebenen integrierten Baustein TDA 4605 von Siemens, auf. Die Steuereinrichtung IC wird über ihren Anschluß 6 mit der notwendigen Speisespannung versorgt, aus der intern in einer Speisespannungsstufe SP der Steuereinrichtung IG notwendige Referenzspannungen und Schaltschwellen festgelegt werden, während der Anschluß 4 auf Bezugspotential B der Primärseite des Schaltnetzteiles liegt. Der als Ausgang wirkende Anschluß 5 der Steuereinrichtung IC ist - gegebenenfalls über einen Widerstand R1 - mit einem Steueranschluß des Schaltelementes T verbunden. Zum pulsweitenmodulierten Ansteuern dieses Schaltelementes T erhält die Steuereinrichtung IC an einer ersten Eingangsklemme, hier dem Anschluß 2, ein Primärstromsignal. Der Primärstromanstieg in der Primärwicklung n_{P} des Übertragers TD wird mittels RC-Glied, bestehend aus der parallel zur gleichgerichteten Wechselspannung geschalteten Serienschaltung des Widerstandes R2 und Kondensators C2, als Spannungsanstieg am Anschluß 2 der Steuereinrichtung IC nachgebildet. Bei Erreichen eines von der Regelspannung am noch zu erläuternden Anschluß 1 abgeleiteten Wert, wird der Ausgangsimpuls am Ausgang des Anschlusses 5 beendet.

Zum exakten Ansteuern des Schaltelementes T sind zwei weitere Informationen notwendig. Am Anschluß 8 erhält die Steuereinrichtung IC ein Nulldurchgangsdetektorsignal U_{N}, das den Impulsstart bestimmt. Am Anschluß 1 wird der Steuereinrichtung IC eine von der Ausgangsspannung U_{A} abhängige Regelspannung U_{R} zugeführt. Dies erfolgt zweckmäßigerweise mit einer zur Sekundärwicklung n_{S} festgekoppelten Regelwicklung n_{R} mit den Anschlüssen c und d. Der Anschluß d der Regelwicklung n_{R} liegt auf Bezugspotential B der Primärseite des Schaltnetzteiles. Der Anschluß c der Regelwicklung n_{R} des Transformators ist dagegen zur Erzeugung der Regelspannung U_{R} über einen Widerstand R10 mit dem Eingang eines Einweggleichrichters, der aus der Diode D6 und dem Glättungskondensator C5 besteht, verbunden. Parallel zu diesem Glättungskondensator C5 liegt die Serienschaltung des Widerstandes R8 mit einem Potentiometer P1 und einem weiteren Widerstand R7. Am Verbindungspunkt zwischen dem Potentiometer P1 und dem Widerstand R7 liegt die eingangs erwähnte Regelspannung U_{R} an, die - ggf. über die Parallelschaltung eines Widerstandes R12 mit einem Kondensator C10 - an den Anschluß 1 der Steuereinrichtung IC zuführbar ist. Die Diode D6 ist so gepolt, daß sich eine positive Regelspannung U_{R} einstellt. Der Widerstand R10 mit dem Kondensator C5 wirkt zugleich als Tiefpaß und verhindert, daß parasitäre Überschwinger zur Spitzengleichrichtung führen. Damit steht am Anschluß 1 der Steuereinrichtung IC eine zur Ausgangsspannung U_{A} proportionale Regelspannung U_{R} an. Diese Regelspannung U_{R} wird im Inneren der Steuereinrichtung IC einem Regelverstärker RV zugeführt und dort mit einer internen Referenz-Spannung verglichen. Das Ergebnis dieses Vergleichs wird einem Eingang eines Pulsweitenmodulators PWM zugeführt und als Maß für die Ausgangsimpulsbreite am Ausgang des Pulsweitenmodulators PWM verwendet. Ein Ausgang des Pulsweitenmodulators PWM ist mit dem Anschluß 5 der Steuereinrichtung verbunden. Darüber hinaus erhält der Pulsweitenmodulator PWM an einem weiteren Eingang Impulse, die in Abhängigkeit von Nulldurchgängen einer an der Regelwicklung n_{R} abgreifbaren Spannung bereitgestellt werden. Dazu wird dem Anschluß 8 der Steuereinrichtung eine an der Regelwicklung n_{R} abgreifbare Wechselspannung über die Serienschaltung der Widerstände R9 und R10 zugeführt. Im Inneren der Steuereinnrichtung IC ist zwischen dem vorgenannten Eingang des Pulsweitenmodulators und dem Anschluß 8 ein Nulldurchgangsdetektor ND vorgesehen. Die Nulldurchgänge der Wechselspannung U_{N} gelangen somit an den Eingang des Nulldurchgangsdetektors ND. In diesem Nulldurchgangsdetektor ND wird nach jedem Nulldurchgang ein Impuls erzeugt, der dem Pulsweitenmodulator PWM zugeführt wird und nach dem Anschwingen des Schaltnetzteiles einen Ausgangsimpuls am Anschluß 5 der Steuereinrichtung IC auslöst. Der Widerstand R9 dient als Begrenzerwiderstand und die Kapazität C8, die parallel zur Serienschaltung der Diode D6 und dem Glättungskondensator C5 geschaltet ist, unterdrückt hochfrequente Überschwinger.

Über die Anschlüsse 2 und 3 erhält die Steuereinrichtung IC darüber hinaus weitere Informationen. Am Anschluß 2 wird der bereits erwähnte Primärstromanstieg in der Primärwicklung n_{R} mittels einem externen RC-Glied als Spannungsanstieg am Anschluß 2 nachgebildet. Dieses RC-Glied wird durch den kapazitiven Spannungsteiler, bestehend aus dem Widerstand R2 und dem Kondensator C2, gebildet. Dazu ist der Widerstand R2 zwischen dem Anschluß 2 der Steuereinrichtung IC und dem positiven Pol der Gleichspannung U_{E} und der Kondensator C2 zwischen dem Anschluß 2 der Steuereinrichtung IC und Bezugspotential B der Primärseite des Schaltungsteiles verbunden. Zwischen einem weiteren Eingang des Pulsweitenmodulators PWM und dem Anschluß 2 der Steuereinrichtung IC ist eine Primärstromnachbildungsstufe PS vorgesehen. Diese Primärstromnachbildungsstufe PS dient dazu, bei Erreichen eines von der Regelspannung U_{R} am Anschluß 1 abgeleiteten Wertes den Ausgangsimpuls am Anschluß 5 der Steuereinrichtung zu beenden. Der Anschluß 3 der Steuereinrichtung IC ist mit dem Verbindungspunkt eines Spannungsteilers, der aus den Widerständen R3 und R4 besteht, verbunden. Die in Serie geschalteten Widerstände R3 und R4 liegen dabei zwischen dem positiven Pol der Eingangsspannung U_{E} und Bezugspotential B. Dadurch wird dem Anschluß 3 der Steuereinrichtung IC ein Maß für die Eingangsspannung U_{E} mitgeteilt. Im Inneren der Steuereinrichtung IC ist der Anschluß 3 mit einer Primärspannungsüberwachungsstufe PU in Verbindung, die ausgangsseitig mit einem weiteren Eingang des Pulsweitenmodulators in Verbindung steht. In dieser Primärspannungsüberwachungsstufe PU wird die Spannung am Anschluß 3 der Steuereinrichtung IC mit einer internen Referenz verglichen und bei Netzunterspannung, also einer zu niedrigen Eingangsspannung U_{E}, abgeschaltet.

Die Spannungsversorgung der Steuereinrichtung IC erfolgt über Anschluß 6, während der Anschluß 4 auf Bezugspotential B liegt. Beim Einschalten des Schaltnetzteiles werden zunächst dem Anschluß 6 über einen Widerstand R5 Wechselspannungsimpulse der Wechselspannung zugeführt. Im eingeschwungenen Zustand erfolgt die Spannungsversorgung über eine Einweggleichrichteranordnung, bestehend aus der Diode D7 und dem Glättungskondensator C7. Die Diode 7 ist dabei so gepolt, daß am Anschluß 6 der Steuereinrichtung IC eine positive Spannung anliegt, also ihre Anode mit dem Anschluß c der Regelwicklung n_{R} verbunden ist.

Die Laststrecke des Schaltelementes T ist einerseits an Bezugspotential B und andererseits an den Anschluß a der Primärwicklung n_{P} des Transformators TD angeschlossen. Der andere Anschluß b der Primärwicklung n_{P} ist mit dem positiven Pol der Eingangsspannung U_{E} in Verbindung. Wird - wie im vorliegenden Fall - als Schaltelement T ein MOS-Leistungstransistor verwendet, so ist dessen Sourceanschluß an Bezugspotential B und dessen Drainanschluß an den Anschluß a der Primärwicklung n_{P} anzuschließen. Parallel zur Laststrecke des Schaltelementes T ist ein Kondensator C8 geschaltet, der zusammen mit der Induktivität der Primärwicklung n_{P} die Eigenfrequenz des Schaltnetzteiles bestimmt.

Eine als Snubber-Netzwerk bekannte Anordnung mit einer Diode D8, einem Widerstand R11 sowie eines Kondensators C9 begrenzt eine beim Schalten auftretende Spitzenspannung von Überschwingern und ist parallel zur Primärwicklung n_{P} geschaltet.

Der Vollständigkeit halber sei erwähnt, daß das Bezugspotential B der Primärseite des Schaltnetzteiles vom Anschluß A2 der Sekundärseite durch einen Kondensator C13 kapazitiv entkoppelt ist.

Wie aus der Figur ersichtlich, weist die Steuereinrichtung IC noch einen Überlastverstärker UV auf, der eingangsseitig mit dem ersten Anschluß 1 und ausgangsseitig einerseits mit dem Regelverstärker RV und andererseits mit dem Anschluß 7 der Steuereinrichtung IC in Verbindung steht. Dieser Überlastverstärker UV dient zum Zurückregeln der Spannung U am Ausgang des Regelverstärkers RV auf einen vorgegebenen Maximalwert, wodurch die maximale Impulsweite begrenzt wird. Wird der Anschluß 7 der Steuereinrichtung IC und damit der Ausgang des Überlastverstärkers UV über einen Kondensator C3 mit Bezugspotential B verbunden, so führt dies dazu, daß das Schaltnetzteil beim Einschalten mit verkürzten Impulsen anläuft. Die Betriebsfrequenz des Schaltnetzteiles bleibt dabei auch während des Anlaufes, also dem Einschalten des Schaltnetzteiles, außerhalb des Hörbereiches.

Diese Maßnahme war jedoch bei Netzteilen, die für hohe Leistung und für hohe Frequenz optimiert sind, nicht ausreichend. Erfindungsgemäß ist deswegen die bisher beschriebene Schaltungsanordnung eines freischwingenden Sperrwandler-Schaltnetzteiles um eine kapazitive Einrichtung erweitert, die zwischen den Anschluß 7 und den Anschluß 1 der Steuereinrichtung IC geschaltet ist. Die kapazitive Einrichtung kann beispielsweise aus einem Kondensator oder - wie in der Figur dargestellt - aus der Serienschaltung eines Widerstandes R6 mit einem Kondensator C4 bestehen.

Bei Verwendung der oben erwähnten Parallelschaltung des Widerstandes R12 mit dem Kondensator C10 am Anschluß 1 der Steuereinrichtung IC kann die kapazitive Einrichtung auch zwischen den Anschluß 7 und dem dem ersten Anschluß 1 gegenüberliegenden Anschluß der Parallelschaltung des Kondensators C10 mit dem Widerstand R12 angeschlossen werden. Diese zweite Möglichkeit ist in der Figur strichliert eingezeichnet. In diesem Fall muß selbstverständlich die direkte Verbindung zwischen der kapazitiven Einrichtung R6, C4 und dem Anschluß 1 entfallen.

Durch das Vorsehen der erfindungsgemäßen kapazitiven Einrichtung wird erreicht, daß der Überlastverstärker UV ausgangsseitig in Abhängigkeit der Regelspannung U_{R} belastet wird. Dies führt dazu, daß auch bei Schaltnetzteilen, die für hohe Leistungen ausgelegt sind, deren Betriebsfrequenz nicht bis in den Hörbereich im Standby-Betrieb, also bei geringer Belastung, absinkt. Das erfindungsgemäße Schaltnetzteil zeichnet sich dadurch aus, daß im Standby-Betrieb, also bei niedriger Belastung, keine hörbaren Störgeräusche auftreten.

## Patentansprüche

1. Schaltungsanordnung für ein freischwingendes Sperrwandler-Schaltnetzteil mit
- einem Transformator (TD), der mindestens eine Primärwicklung (n_{P}), eine Regelwicklung (n_{R}) und eine Sekundärwicklung (n_{S}) mit daran angeschlossener Gleichrichterstufe (R13, D5, C12) aufweist;
- einer eine Gleichspannung (U_{E}) liefernde Gleichspannungsquelle;
- einer Schalteinrichtung (T), um die Gleichspannung (U_{E}) an die Primärwicklung (n_{P}) taktweise anzulegen;
- einer Steuereinrichtung (IC) zum pulsweitenmodulierten Ansteuern der Schalteinrichtung (T), wobei die Steuereinrichtung (IC) mindestens aufweist:
- einen ersten Anschluß (1) zum Anlegen einer von einer Ausgangsspannung (U_{A}) des Schaltnetzteiles abhängigen Regelspannung (U_{R});
- einen zweiten Anschluß (8) zum Anlegen eines Nulldurchgangssignals (U_{N}), das Impulse in Abhängigkeit von Nulldurchgängen einer an der Regelwicklung (n_{R}) abgreifbaren Wechselspannung bereitstellt;
- einen dritten Anschluß (7);
- einen Ausgangsanschluß (5), an dem Steuerimpulse zum Ansteuern der Schalteinrichtung (T) abgreifbar sind;
- einen Pulsweitenmodulator (PWM), dessen Ausgang mit dem Ausgangsanschluß (5) verbunden ist;
- einen Regelverstärker (RV), der eingangsseitig mit dem ersten Anschluß (1), ausgangsseitig mit dem Pulsweitenmodulator (PWM) verbunden und zur Erzeugung einer Spannung (U) vorgesehen ist, die die Pulsweite bestimmt;
- einen Überlastverstärker (UV), der eingangsseitig mit dem ersten Anschluß (1), ausgangsseitig mit dem dritten Anschluß (7) verbunden und zum Zurückregeln der Spannung (U) am Ausgang des Regelverstärkers (RV) vorgesehen ist, wobei eine Beschaltung des dritten Anschlusses (7) mit einer Kapazität (C3) gegen ein Bezugspotential (B) ein Anlaufen des Schaltnetzteiles mit verkürzten Impulsen ermöglicht;
- einen Nulldurchgangsdetektor (ND), der eingangsseitig mit dem zweiten Anschluß (8) und ausgangsseitig an den Pulsweitenmodulator (PWM) angeschlossen ist und einen Impulsstart freigibt,
**dadurch gekennzeichnet**,
daß zwischen dem ersten Anschluß (1) und dem dritten Anschluß (7) eine kapazitive Einrichtung (R6, C4) geschaltet ist, durch die der Überlastverstärker (UV) ausgangsseitig in Abhängigkeit der Regelspannung (U_{R}) belastbar ist.

2. Schaltungsanordnung nach Anspruch 1,
**dadurch gekennzeichnet**,
daß die kapazitive Einrichtung ein Kondensator (C4) ist.

3. Schaltungsanordnung nach Anspruch 1,
**dadurch gekennzeichnet**,
daß die kapazitive Einrichtung (R6, C4) eine Reihenschaltung eines Kondensators (C4) mit einem Widerstand (R6) aufweist.

4. Schaltungsanordnung nach einem der Ansprüche 1 bis 3,
**dadurch gekennzeichnet**,
daß die Regelspannung (U_{R}) dem ersten Anschluß (1) der Steuereinrichtung (IC) über einen Widerstand (R12) mit parallel geschaltetem Kondensator (C10) verbunden ist.

## Claims

1. Circuit arrangement for a free-running flyback-convertor switched-mode power supply having:
- a transformer (TD) which has at least one primary winding (n_{P}), one control winding (n_{R}) and one secondary winding (n_{S}) with a rectifier stage (R13, D5, C12) connected thereto;
- a DC voltage source which supplies a DC voltage (U_{E});
- a switching device (T) in order to apply the DC voltage (U_{E}) in a pulsed manner to the primary winding (n_{P});
- a control device (IC) for driving the switching device (T) in a pulse-width-modulated manner, the control device (IC) having at least:
- one first connection (1) for the application of a control voltage (U_{R}) which is dependent on the output voltage (U_{A}) of the switched-mode power supply;
- one second connection (8) for the application of a zero-crossover signal (U_{N}) which provides pulses as a function of zero crossovers of an AC voltage which can be picked off on the control winding (n_{R});
- one third connection (7);
- one output connection (5) on which control pulses for driving the switching device (T) can be picked off;
- one pulse-width modulator (PWM) whose output is connected to the output connection (5);
- one control amplifier (RV) which is connected on the input side to the first connection (1) and on the output side to the pulse-width modulator (PWM) and is provided for producing a voltage (U) which determines the pulse width;
- one overload amplifier (UV) which is connected on the input side to the first connection (1) and on the output side to the third connection (7) and is provided for downward regulation of the voltage (U) at the output of the control amplifier (RV), starting of the switched-mode power supply using shortened pulses being made possible by the third connection (7) being connected by means of a capacitor (C3) to a reference-earth potential (B);
- one zero-crossover detector (ND) which is connected on the input side to the second connection (8) and on the output side to the pulse-width modulator (PWM) and enables a pulse start,
characterized in that a capacitive device (R6, C4) is connected between the first connection (1) and the third connection (7), by means of which the overload amplifier (UV) can be loaded on the output side as a function of the control voltage (U_{R}).

2. Circuit arrangement according to Claim 1, characterized in that the capacitive device is a capacitor (C4).

3. Circuit arrangement according to Claim 1, characterized in that the capacitive device (R6, C4) has a series circuit of a capacitor (C4) with a resistor (R6).

4. Circuit arrangement according to one of Claims 1 to 3, characterized in that the control voltage (U_{R}) is connected to the first connection (1) of the control device (IC) via a resistor (R12) with a parallel-connected capacitor (C10).

## Revendications

1. Montage pour une alimentation à découpage à accumulation et à oscillations libres comportant
- un transformateur (TD), qui comporte au moins un enroulement primaire (n_{P}), un enroulement de régulation (n_{R}) et un enroulement secondaire (n_{S}), auquel est raccordé un étage redresseur (R13, D5, C12);
- une source de tension continue délivrant une tension continue (U_{E});
- un dispositif d'interruption (T), pour appliquer d'une manière cadencée la tension continue (U_{P}) à l'enroulement primaire (n_{P});
- un dispositif de commande (IC) pour effectuer la commande, modulée selon une modulation d'impulsions en durée, du dispositif d'interruption (T), le dispositif de commande (IC) comportant au moins :
- une première borne (1) d'application d'une tension réglée (U_{R}), qui dépend d'une tension de sortie (U_{A}) de l'alimentation à découpage;
- une seconde borne (8) d'application d'un signal (U_{N}) de passage par zéro, qui met à disposition des impulsions en fonction de passages par zéro d'une tension alternative, qui peut être prélevée sur l'enroulement de régulation (n_{R});
- une troisième borne (7);
- une borne de sortie (5), sur laquelle peuvent être prélevées des impulsions de commande du dispositif d'interruption (T);
- un modulateur d'impulsions en durée (PMW), dont la sortie est reliée à la borne de sortie (5);
- un amplificateur de régulation (RV), qui est relié, côté entrée, à la première borne (1) et côté sortie au modulateur (PWM) d'impulsions en durée et qui est destiné à produire une tension (U), qui détermine la durée des impulsions;
- un amplificateur de surcharge (UV), qui est relié côté entrée à la première borne (2) et côté sortie à la troisième borne (7) et qui est destiné à effectuer une régulation en retour de la tension (U) à la sortie de l'amplificateur de régulation (RV), un raccordement de la troisième borne (7) à une capacité (C3) par rapport à un potentiel de référence (B) permettant un amorçage de l'alimentation à découpage par des impulsions raccourcies;
- un détecteur (ND) de passages par zéro, qui est raccordé côté entrée à une seconde borne (8) et côté sortie au modulateur (PWM) d'impulsions en durée et qui fait que des impulsions commencent à apparaître,
caractérisé par le fait qu'entre la première borne (1) et la troisième borne (7) est branché un dispositif capacitif (R6, C4), par lequel l'amplificateur de surcharge (UV) peut être chargé côté sortie en fonction de la tension réglée (U_{R}).

2. Montage suivant la revendication 1, caractérisé par le fait que le dispositif capacitif est un condensateur (C4).

3. Montage suivant la revendication 1, caractérisé par le fait que le dispositif capacitif (R6,C4) comporte un circuit série formé d'un condensateur (C4) et d'une résistance (R6).

4. Montage suivant l'une des revendications 1 à 3, caractérisé par le fait que la tension de régulation (U_{R}) est reliée à la première borne (1) du dispositif de commande (IC) par l'intermédiaire d'une résistance (R12), en parallèle avec laquelle est branché un condensateur (C10).
